# EUROPEAN PATENT APPLICATION

(11) **EP 2 019 345 A1**
(43) Date of publication of application: **28.01.2009**
(21) Application number: 08159592.8
(22) Date of filing: 03.07.2008
(51) Int. Cl.: G05B 19/18

(54) **Method of measuring position detection error in machine tool**

(30) Priority: 25.07.2007 JP 2007193365
(71) Applicant: Fanuc Ltd, Yamanashi 401-0597 (JP)
(72) Inventor: KAWAI, Tomohiko, Yamanashi 401-0597 (JP); EBIHARA, Kenzo, Yamanashi 401-0597 (JP); ODA, Takayuki, Yamanashi 401-0597 (JP)
(74) Representative: Ward, James Norman

(57) **Abstract**

A machine tool position detection error measurement method that eliminates the effects of pitch, yaw, and roll of the axes at the point of machining of a CNC machine tool and improved machining accuracy. The method comprises a step of compensating positioning accuracy of a positioning-error-measuring linear scale using a laser distance-measuring device, a step of mounting the compensated positioning-error-measuring linear scale parallel to a linear axis of the machine tool, and a step of comparing a motion amount obtained from the position detector by moving the linear axis a certain amount and a motion amount read from the positioning-error-measuring linear scale mounted parallel to the linear axis and storing a difference therebetween as error data of the position detector for the machine tool.

## Description

### BACKGROUND OF THE INVENTION

### 1. Field of the Invention

The present invention relates to a method of measuring position detection error of a position detector provided in a machine tool, and more particularly to a method of measuring positioning error in the vicinity of a machining point of a machine tool due to pitch, yaw and roll, and also to compensation of detection data of the position detector using error data obtained by the position detection error measuring method.

### 2. Description of Related Art

A known technique for improving position detection accuracy of a linear scale used on an X-Y table of a semiconductor manufacturing device, for example, involves moving each axis of the X-Y table a certain distance at a time, measuring the actual distance moved using a laser distance-measuring device, calculating the difference between the commanded motion distance and the actual motion distance, and using the obtained difference data to improve the position detection accuracy of the linear scale used on the X-Y table (JP03-175319A).

Compared to a laser distance-measuring device, the absolute accuracy of a linear scale is not good. However, an advantage of the linear scale is its measurements are very much less affected by changes in ambient temperature and atmospheric pressure compared to a laser distance-measuring device.

Precision optical part molds, such as DVD pick-up lenses and the like, demand very high dimensional accuracy on the order of nanometers. To machine a workpiece to the correct shape a computer numerical controller (CNC) machine tool with its high positioning accuracy is best. However, it is difficult to produce a CNC machine tool capable of positioning with absolute accuracy on the order of nanometers.

In addition, in general, sliders used in a machine tool are susceptible to the tilting due to pitch, yaw, and roll along each of the X axis, Y axis, and Z axis. In particular, with the effect of tilting due to pitch and roll, distance conversion at a high position on the slide multiplies errors several times compared to a low position.

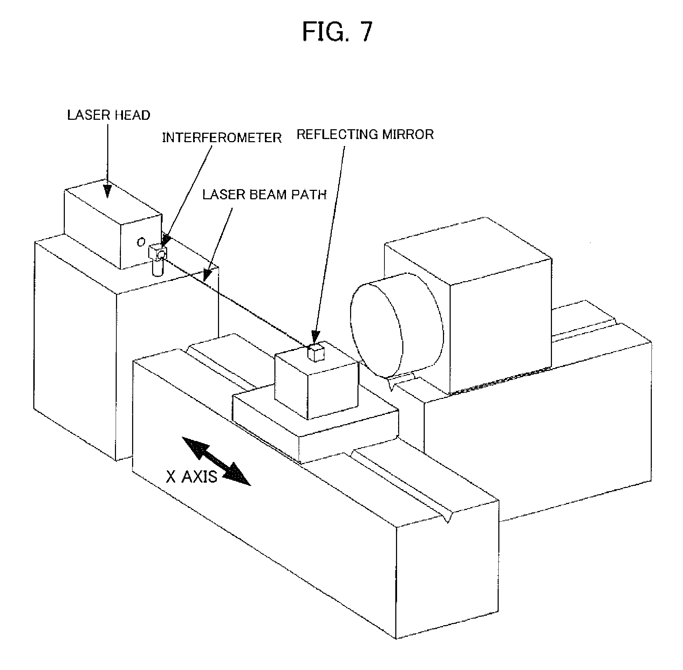

In current CNC machine tools, the position detector and the point of machining are separated from each other. Therefore, to eliminate to the maximum extent possible the effects of the pitch, yaw, and roll of each axis at the point of machining (which is not detected by the aforementioned CNC position detector) and obtain more accurate machining, it is desirable to measure movement in the vicinity of the point of machining using a laser distance-measuring device with superior ranging accuracy (see, for example, FIG. 7).

However, because the laser oscillation wavelength fluctuates with changes in the ambient environment, such as changes in temperature and atmospheric pressure, by necessity such measurements must be carried out either at locations where such environmental changes are small or by covering the optical path of the laser, measuring the temperature and the atmospheric pressure in the vicinity of the optical path during measurement using the laser, and feeding back those measured results in real time to the laser wavelength. However, it is very difficult to provide such a cover in a case in which laser ranging is carried out in the vicinity of the point of machining.

### SUMMARY OF THE INVENTION

The present invention enables more accurate machining by measuring a motion in the vicinity of a point of machining using a linear scale and carrying out compensation of a position detector mounted on a CNC machine tool based on the measured results, to eliminate effects of pitch, yaw and roll of respective axes in the vicinity of the point of machining, which is not detected by the position detector provided in the CNC machine tool.

The method of the present invention is for measuring a position detection error of a position detector provided at a linear axis of a machine tool. The method comprises the steps of: compensating a positioning error of a positioning-error-measuring linear scale using a laser distance-measuring device; mounting said positioning-error-measuring linear scale of which the positioning error has been compensated, to be parallel to the linear axis of the machine tool; and storing a difference between a motion amount detected by the position detector and a motion amount measured by said positioning-error-measuring linear scale when the linear axis is driven to move by a predetermined amount as error data of the position detector of the machine tool.

The positioning-error-measuring linear scale may be mounted in a vicinity of a point of machining in the machine tool.

The position detector may comprise a linear scale.

The method may further comprise a step of compensating detection data of the position detector using the stored error data.

By using, as a master scale, a linear scale that has been compensated using a laser distance-measuring device, the effect of tilting in the pitch, yaw, and roll directions present in the slide used in a CNC machine tool can be compensated by a simple method using values measured at the point of machining, that is, at the height at which machining is actually carried out, enabling more accurate CNC machine tool positioning accuracy to be achieved.

In addition, since the linear scale is simply positioned in the vicinity of the point of machining of the CNC machine tool using a jig, there is no need to adjust an optical axis or the like as is the case when using a laser distance-measuring device, enabling the position detection error measurement method of the present invention to be implemented at the production facility, laboratory or other such site where the CNC machine tool is being used.

Further, since there is no need to adjust the optical axis, the position detection error measurement method of the present invention can be easily implemented across the entire point of machining area of the CNC machine tool by successively offsetting each of the axes a predetermined amount, thus achieving position detection error measurement of the entire point of machining area in units of small blocks at the production facility, laboratory or other such site where the CNC machine tool is being used.

### BRIEF DESCRIPTION OF THE DRAWINGS

FIG. 1 is a perspective view of main parts of a CNC machine tool that is one embodiment in which the present invention is executed;
FIG. 2 shows an example of an error measurement linear scale error measurement device using a laser distance-measuring device;
FIG. 3 is a graph showing an example of linear scale error;
FIG. 4 is a diagram showing machine tool X axis positioning error measurement using a linear scale;
FIG. 5 is a graph of an example of machine tool position detector error;
FIG. 6 shows an example of a machine tool storing error measurement linear scale error compensation data; and
FIG. 7 is a diagram showing machine tool X axis positioning error measurement using a laser distance-measuring device.

### DETAILED DESCRIPTION

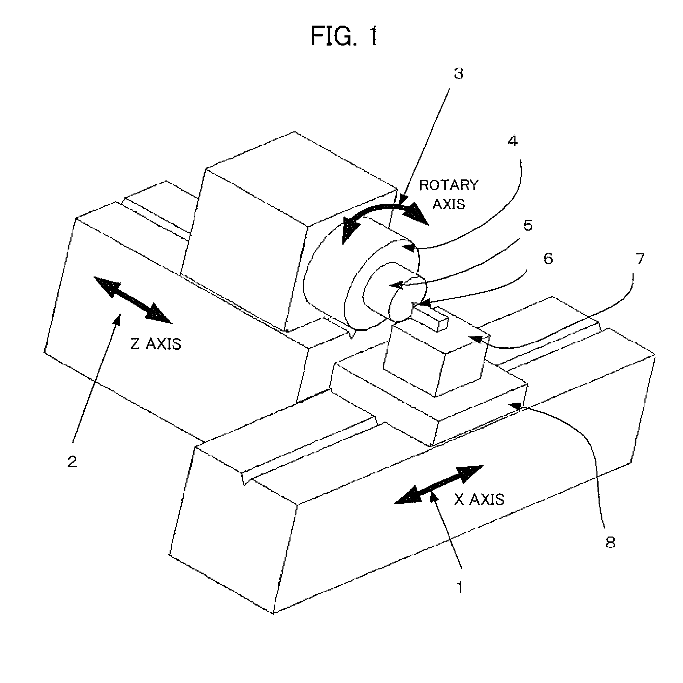

FIG. 1 is a perspective view of main parts of a CNC machine tool that is one embodiment in which the present invention is executed, with a linear scale mounted on the machine tool in the vicinity of a point of machining.

On the CNC machine tool are mounted a tool 6 and a workpiece 5, with X axis 1 and Z axis 2 as two rectilinear axes, and a rotary axis 3 mounted on the X axis 2. A rotary table 4 is mounted on the rotary axis 3. The workpiece 5 is detachably fixed in place on the rotary table 4. A tool fixing jig 7, on which a tool 6 is fixedly mounted, is detachably mounted on a slider 8 of the X axis 1. In a machine tool of this type of configuration, as described above positioning error arises due to pitch, yaw, and roll around each of the rectilinear axes.

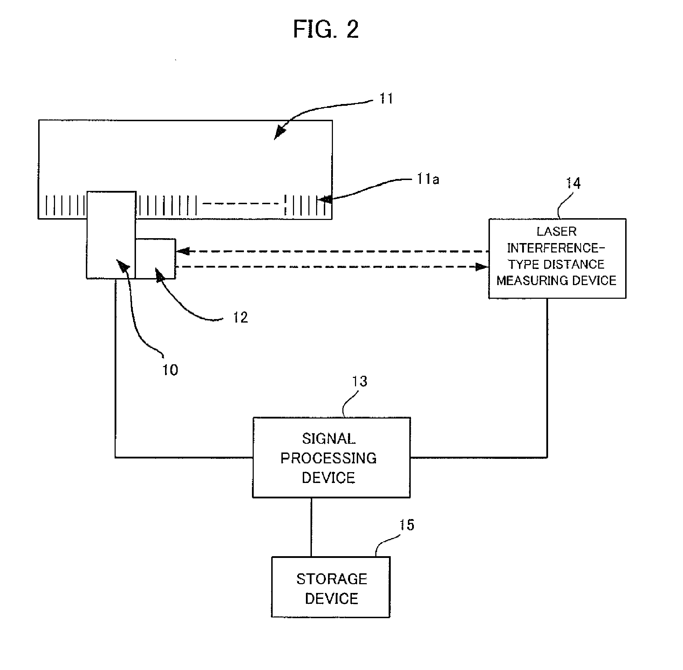

FIG. 2 illustrates an example of an error measurement device designed to improve the absolute accuracy of a positioning-error-measuring linear scale that is mounted in the vicinity of the point of machining of the CNC machine tool. The linear scale, which may be optical, magnetic, or electrical, when examined at the nanometer scale, does not have as good an absolute accuracy as a laser distance-measuring device does. However, measurement performed by the linear scale is very little affected by changes in ambient temperature and atmospheric pressure compared to the laser distance-measuring device. Accordingly, to improve absolute accuracy, the linear scale is compensated using the laser distance-measuring device in an environment known to have little change in temperature and atmospheric pressure.

In FIG. 2, reference numeral 11 denotes a linear scale mounted on the CNC machine tool as an error measurement linear scale. As an example of the linear scale in question, that which is published in JP-2006-38839-A1, previously filed by the present applicant, can be used. The linear scale 11 is fixedly mounted on a mounting, not shown. A transmission-type measuring pattern (slits) 11a having a constant pitch is provided on the linear scale 11. On a measurement head 10 is mounted a light receiving element that detects light from a light emitting element, not shown. The measurement head 10 is disposed opposite and facing the measuring pattern 11a in such a way as to be movable in a direction extending the length of the measuring pattern 11a. Detection signals of the measuring pattern 11a detected by the measurement head 10 are output to a signal processing device.

In the above-described configuration, the measurement head 10 is moved, detection signals obtained at a location where the linear scale measuring pattern 11a is to be compensated and detection signals from a laser interference-type distance measuring device 14 are compared, and position error is measured. The laser interference-type distance measuring device 14 measures a distance between the measurement head 10 and the distance measuring device 14 using a laser beam reflected by a reflecting mirror 12 mounted on the measurement head 10. By measuring position error over the entire linear scale 11, "position error data" to correct the positioning accuracy of the linear scale is obtained, and such "position error data" is stored in a storage device.

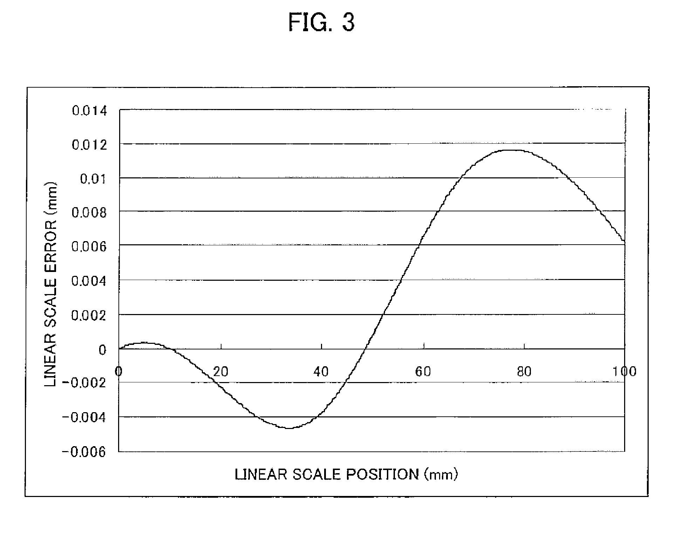

FIG. 3 shows an example obtained when error compensation over the entire 100 mm length of the linear scale 11 shown in FIG. 2 was measured. The linear scale 11 was moved 0.01 mm at a time, that is, 0.01 mm according to the linear scale 11. At each time, the actual motion amount was measured with the laser distance-measuring device. The error, which is equal to the linear scale motion amount minus the motion amount as measured by the laser distance-measuring device, is represented by the vertical axis of the graph shown in FIG. 3, and the position of the linear scale is represented by the horizontal axis, yielding the relation shown in FIG. 3. These measurements were taken under conditions in which the laser distance-measuring device is little affected by changes in ambient temperature and atmospheric pressure.

According to the graph shown in FIG. 3, for example, the error at the position of 20 mm in the linear scale is -0.0023 mm, and thus when the linear scale is moved from 0 mm to 20 mm according to the linear scale, the actual distance moved is 20 mm - 0.0023 mm = 19.9977 mm. Therefore, where it is desired to stop at a position of 20.000 mm, if stopped at a position of 20.002 mm according to the linear scale, since the error at 20.0024 mm is -0.0024 mm, the linear scale is stopped at 20.0024 - 0.0024 mm = 20.000 mm.

In other words, compensation of the positioning accuracy of the linear scale like that described above involves using as the actual position a value that includes the amount of the position error of the linear scale at that position.

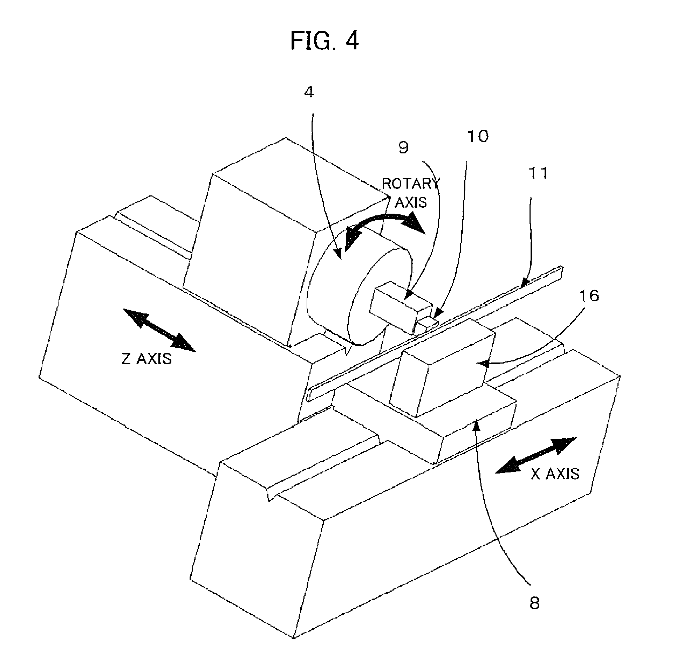

FIG. 4 shows the CNC machine tool illustrated in FIG. 1 with the workpiece 5, the tool 6, and the tool fixing jig 7 removed and a read head fixing jig 9 that fixes the measurement head 10 in place detachably mounted on the rotary table 4. In addition, a linear scale fixing jig 16 that fixes the error measurement linear scale 11 in place is detachably mounted on the slider 8. With such an arrangement, as shown in FIG. 4 the error measurement linear scale 11 can be mounted parallel to the X axis, and moreover in the vicinity of the point of machining, of the CNC machine tool.

The error measurement linear scale 11 is used as a positioning error measurement scale for the purpose of measuring detection error of a position detector installed in the CNC machine tool. A motion amount obtained from the position detector of the machine tool by moving the linear axis a certain amount and a motion amount read from the positioning-error-measuring linear scale mounted on that linear axis are compared, and a difference therebetween is stored as error data of the position detector for the machine tool. Positioning error in the vicinity of the point of machining of the CNC machine tool is measured and absolute position detection accuracy of the machine tool is compensated. It should be noted that the motion amount read from the error measurement linear scale is an amount compensated by the "position error data" described above.

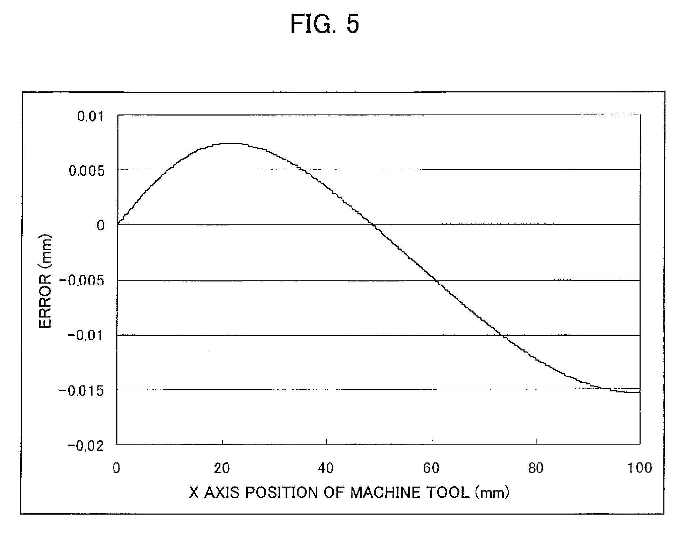

Subsequently, for example, the machine tool X axis is moved 0.01 mm at a time according to the X axis position detector, and each time the motion amount of the positioning-error-measuring linear scale is measured. At each of the positions of the X axis, the error at that position, in other words, the X axis position detector motion amount minus the positioning-error-measuring linear scale motion amount, is recorded, and used as positioning compensation data (FIG. 5). For example, when the X axis is moved to position A', it is found that A' = A + m (where m is the compensation data at position A), such that, if the X axis is moved to A according to the X axis position detector, the X axis can be positioned by the error measurement linear scale.

Further, since there is no need to adjust an optical axis, by successively offsetting a predetermined amount in the two directions of the X axis 1 and the Z axis 2 across the entire point of machining area of the CNC machine tool, the entire point of machining area can be divided into units of small blocks and position detection error can be measured.

As movement means when measuring error of the error measurement linear scale, the sliders of the CNC machine tool can be used, as follows: A fixing jig is provided that abuts and mounts the error measurement linear scale and the laser beam reflecting mirror on the CNC machine tool X axis slider 8 in such a way that the optical axes of the error measurement linear scale and the laser beam are parallel. Since the error measurement linear scale and the laser beam reflecting mirror are adjacently disposed, errors due to tilting in the directions of pitch, yaw, and roll of the slider used in the CNC machine tool cancel each other out. With such an arrangement, there is no need to provide a special moving device for the error measurement linear scale error measurement. In addition, because error measurement is being carried out in the direction of the X axis, errors in the directions of the Y axis and the Z axis do not necessitate the use of a laser distance-measuring device in the Y axis and the Z axis directions.

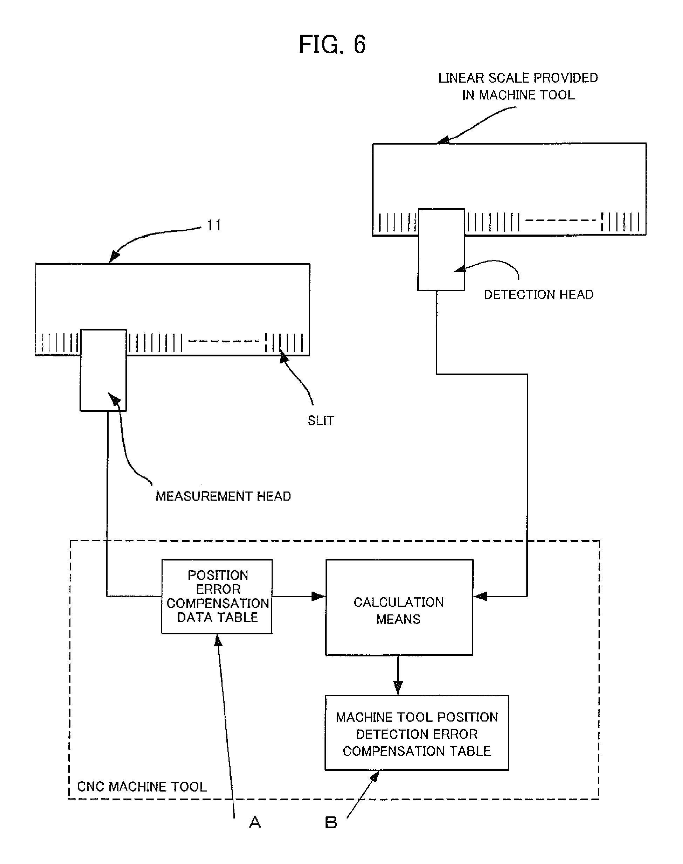

As a third embodiment of the present invention, as shown in FIG. 6 a data table for error compensation of the error measurement linear scale 11 obtained by the means shown in FIG. 2 is stored in the machine tool numerical controller. When the machine tool operator carries out error compensation of the machine tool position detector, the error measurement linear scale is mounted on the machine tool, thereby enabling a machine tool position detection error compensation table to be produced automatically.

## Claims

1. A method of measuring a position detection error of a position detector provided at a linear axis of a machine tool, comprising the steps of:
compensating a positioning error of a positioning-error-measuring linear scale using a laser distance-measuring device;
mounting said positioning-error-measuring linear scale of which the positioning error has been compensated, to be parallel to the linear axis of the machine tool; and
storing a difference between a motion amount detected by the position detector and a motion amount measured by said positioning-error-measuring linear scale when the linear axis is driven to move by a predetermined amount as error data of the position detector of the machine tool.

2. A method of measuring a position detection error in a machine tool according to claim 1, wherein said positioning-error-measuring linear scale is mounted in a vicinity of a point of machining in the machine tool.

3. A method of measuring a position detection error in a machine tool according to claim 1, wherein the position detector comprises a linear scale.

4. A method of measuring a position detection error in a machine tool according to claim 1, further comprising a step of compensating detection data of the position detector using the stored error data.
